# EUROPEAN PATENT APPLICATION

(11) **EP 4 525 200 A1**
(43) Date of publication of application: **19.03.2025**
(21) Application number: 23197972.5
(22) Date of filing: 18.09.2023
(51) Int. Cl.: H01M 50/578, H01M 50/211, H01M 50/289, H01M 10/647, H01M 10/62, H01M 10/48

(54) **BATTERY PACK WITH POUCH ACCUMULATOR CELLS**

(71) Applicant: Einhell Germany AG, 94405 Landau / Isar (DE)
(72) Inventor: THANNHUBER, Markus, 94405 Landau an der Isar (DE)
(74) Representative: Canzler & Bergmeier Patentanwälte Partnerschaft mbB

(57) **Abstract**

Battery pack (1) for an electronic device, in particular for a power tool, gardening device and/or cleaning device, comprising a housing (2) and a cell stack (17) which is arranged in the housing (2) and comprises a plurality of pouch accumulator cells (22) arranged one above the other along a stack axis (S). The battery pack (1) has at least one elastic compensation-element (27) which is arranged in the direction of the stack axis (S) between the cell stack (17) and the housing (2) in such a way that the elastic compensation-element (27) is compressed during intended use in the event of heat-induced expansion of the cell stack (17) in the direction of the stack axis (S), and/or the battery pack (1) has a sensor (15) with at least one feeler (16, 38), with which the heat-related expansion of the cell stack (17) in the direction of the stack axis (S) can be detected via touch contact with the cell stack (17).

## Description

The present invention relates to a battery pack for an electronic device, in particular for a power tool, gardening device and/or cleaning device, which has a housing and a cell stack arranged in the housing. The cell stack comprises a plurality of pouch accumulator cells arranged one above the other along a stack axis.

A battery pack having at least one pouch accumulator cell is known from EP 3 933 956 A1. The battery pack comprises a proximity sensor arranged inside the battery pack for detecting a heat-related expansion of the pouch accumulator cell. A disadvantage of the battery pack known in the prior art is that it is expensive to manufacture. Furthermore, the detection of the heat-related expansion is inaccurate.

The object of the present invention is to eliminate the disadvantages known from the prior art, and in particular to create a battery pack which can be manufactured inexpensively and with which it is preferably possible to detect as accurately as possible a heat-related expansion of a pouch accumulator cell.

The object is solved by a battery pack with the features of the independent claim.

Proposed is a battery pack for an electronic device, in particular for a power tool, gardening device and/or cleaning device. The battery pack comprises a housing and a cell stack arranged in the housing, which comprises a plurality of pouch accumulator cells arranged one above the other along a stack axis.

The battery pack preferably has at least one elastic compensation-element which is arranged in the direction of the stack axis between the cell stack and the housing in such a way that, in the intended use, the elastic compensation-element is compressed when the cell stack expands in the direction of the stack axis as a result of heat. The cell stack can therefore be held in a defined position via the elastic compensation-element. When the battery pack is moved during intended use, in particular together with the electronic device, the position of the cell stack within the housing, in particular relative to a sensor, does not change. As a result, the heat-related expansion of the cell stack can in turn be detected very accurately and/or unaltered by means of the sensor. Furthermore, the elastic compensation-element provides a buffer space into which the cell stack can expand in a defined manner when its pouch accumulator cells heat up.

In addition or alternatively to the compensation-element, the battery pack has preferably a sensor with which the heat-related expansion of the cell stack in the direction of the stack axis can be detected. The sensor has a feeler that can preferably detect the heat-related expansion of the cell stack via a contact and/or touch contact, in particular with the cell stack. Such sensors are very cost-effective, which can reduce the manufacturing costs of the battery pack.

Advantageously, the compensation-element is made of a heat-insulating material so that heat conduction in the direction of the stack axis is avoided. Advantageously, a temperature-sensitive component, for example a control unit of a battery management system, can thus be arranged adjacent to the cell stack in the direction of the stack axis without the temperature emitted by the cell stack being conducted to the temperature-sensitive component.

It is also advantageous if the compensation-element is formed from a compressible or incompressible material. It is advantageous if the compensation-element has a solid body, in particular made of a porous and/or compressible material, preferably a foam. In addition or alternatively, it is advantageous if the compensation-element has a resilient structure, in particular made of an incompressible material, the compensation-element preferably being formed as a spring.

It is also advantageous if the compensation-element is arranged with a first side facing the cell stack on a first end face of the cell stack oriented in the direction of the stack axis, in particular directly.

In addition or alternatively, it is advantageous if the compensation-element is arranged with a second side facing away from the first end face of the cell stack on the housing and/or on a control unit, in particular directly.

It is advantageous if the housing has a partition wall which divides the housing into a first cavity, in which the cell stack is preferably arranged, and a second cavity, in which the control unit is preferably arranged. In this case, the compensation-element is preferably arranged with its second side, in particular directly, at the partition wall of the housing. Advantageously, the at least one component arranged in the second cavity, in particular the control unit, is protected by the partition wall from mechanical and/or thermal influences of the cell stack.

In an advantageous enhanced embodiment of the invention, the control unit comprises a printed circuit board preferably extending in the direction of a transverse axis of the battery pack perpendicular to the stack axis. In addition or alternatively, it is advantageous if the control unit comprises a processor.

Preferably, the control unit is arranged in the direction of the stack axis in the area of the first end face of the cell stack and/or stacked on the cell stack. In this context, it is advantageous if the control unit is spaced from the first end face of the cell stack in the direction of the stack axis. As a result, there is no direct contact between the cell stack and the control unit. Advantageously, the control unit is thus protected from thermal and mechanical influences of the cell stack.

It is advantageous if the partition wall has an opening, in particular in the area of a center axis of the cell stack.

It is advantageous if the control unit is designed in such a way that it reduces and/or interrupts a main current of the battery pack when a heat-related maximum expansion of the cell stack detectable by means of the sensor is exceeded.

It is also advantageous if the compensation-element has at least two compensation sections that are spaced apart in the direction of the transverse axis of the cell stack. Preferably, the opening is arranged in the direction of the transverse axis between these two opposing compensation sections.

It is advantageous if the at least two compensation sections are connected to each other, so that the compensation-element preferably extends in a frame-like manner around the opening. Alternatively, it is advantageous if the at least two compensation sections are parts separate from each other.

In order to have a defined starting point for the thermally induced expansion of the cell stack, it is advantageous if the cell stack is, in particular inelastically, connected to the housing at its second end face facing away from the first end face. For this purpose, the cell stack is preferably connected to a first housing wall opposite the partition wall. Advantageously, the cell stack is connected to the housing, in particular to the first housing wall opposite the partition wall, at its second end face facing away from the first end face in such a way that the cell stack expands when heated, starting from the second end face in the direction of the stack axis and/or that only the first end face changes its position in the direction of the stack axis. This allows the thermal expansion of the cell stack to be determined very accurately with the sensor.

Furthermore, it is advantageous if the cell stack comprises at least one heat-conducting element, in particular a heat-conducting plate. The at least one heat-conducting element is preferably arranged in the direction of the stack axis between two pouch accumulator cells arranged one above the other, on the first end face of the cell stack or on the second end face of the cell stack. The heat can be conducted out of the cell stack via the heat-conducting elements.

It is also advantageous if the first end face of the cell stack is at least partially formed by an end face heat-conducting-element, an end face pouch accumulator cell and/or a contact element.

Furthermore, it is advantageous if the end face heat-conducting-element has a recess which preferably extends completely through the end face heat-conducting-element in the direction of the stack axis to the end face pouch accumulator cell. Advantageously, the thermal expansion of the cell stack can thus be detected directly at the end face heat-conducting-element, which improves the measurement accuracy.

It is also advantageous if the recess is arranged in the area of the center axis of the cell stack and/or is closed around its circumference.

It is advantageous if the at least one heat-conducting element is formed from a thermally conductive and/or flame-retardant material, in particular from a polymer which preferably comprises bromide. It is also advantageous if a volume of the heat-conducting-element increases with increasing temperature.

Furthermore, it is advantageous if the at least one heat-conducting-element has at least one contact surface to the at least one adjacent pouch accumulator cell. Preferably, the at least one contact surface is concave and/or shaped to correspond to the heat-conducting-element.

Likewise, it is advantageous if the at least one heat-conducting-element protrudes above the pouch accumulator cells in the direction of the transverse axis, in particular at a first stack side of the cell stack.

Furthermore, it is advantageous if the at least one heat-conducting element, in particular at the first stack side of the cell stack, is connected via a heat-conducting connecting-element, in particular via a heat-conducting adhesive, to a second housing wall extending in the direction of the stack axis, preferably in a materially bonded manner. This allows the heat generated by the pouch accumulator cells to be dissipated via the at least one heat-conducting-element to the at least one connecting-element and from there to the housing, in particular to the second housing wall. In this context, it is advantageous if the first housing wall and/or second housing wall have an external heat radiation surface via which heat can be dissipated to the environment.

It is also advantageous if the connecting-element is elastic and is stretched in the intended use when the cell stack expands in the direction of the stack axis due to heat. Advantageously, this ensures reliable heat transfer from the pouch accumulator cells to the housing wall despite thermally induced changes in the volume of the cell stack.

It is advantageous if the thermally insulating compensation-element has a lower thermal conductivity, in particular less than or equal to 0.8 W/mK, compared to the thermally conductive connecting-element. This can ensure that the heat generated by the pouch accumulator cells is not conducted via the compensation-element to the at least one heat-sensitive electronic component, such as the control unit. Instead, the heat is conducted away from this at least one heat-sensitive electronic component via the heat-conducting connecting-elements.

It is also advantageous if the pouch accumulator cells are electrically interconnected via an electrical connection, in particular at a second stack side opposite the first stack side.

It is likewise advantageous if the cell stack, in particular the at least one heat-conducting-element, is spaced apart on the second stack side from a third housing wall opposite the second housing wall. In addition or alternatively, it is advantageous if the cell stack, in particular the at least one heat-conducting-element, is thermally decoupled from the third housing wall at the second stack side.

It is also advantageous if the housing is an outer housing of the battery pack. Alternatively, it is advantageous if the housing is a carrier housing arranged in an additional outer housing of the battery pack.

It is also advantageous if the battery pack, in particular the outer housing, has an electronics interface for detachable connection to the electronic device.

It is advantageous if the sensor is arranged and/or designed in such a way that it can be used to detect the heat-related expansion of the cell stack over the opening in the partition wall and/or through the opening.

It is also advantageous if the sensor is electrically connected to the control unit and/or is arranged on the control unit, in particular at a side of the control unit facing the cell stack.

It is also advantageous if the at least one feeler extends into the first cavity via the opening.

Furthermore, it is advantageous if the at least one feeler has a contact end. In the unexpanded state of the cell stack, the contact end preferably rests against the first end face of the cell stack. Alternatively, it is advantageous if the contact end is at a distance from the first end face of the cell stack so that a sensor circuit is interrupted. In this context, it is advantageous if the distance in the direction of the stack axis corresponds to the maximum permissible heat-related expansion of the cell stack.

It is advantageous if the at least one feeler, in particular the contact end, is movable or immovable in the direction of the stack axis, in particular resiliently. If the feeler is designed to be movable in the direction of the stack axis, it is advantageous if the contact end of the feeler is spring-loaded in the direction of the cell stack and/or pressed spring-loaded against the first end face of the cell stack.

It is also advantageous if the at least one feeler, in particular the contact end, is electrically conductive.

Furthermore, it is advantageous if the contact end of the at least one feeler is arranged outside or inside the recess in the unexpanded state of the cell stack.

It is also advantageous if the cell stack, in particular at its first end face, has an electrically conductive and/or flexible contact element, in particular a foil, which is preferably made of aluminum.

It is also advantageous if the contact element is arranged in the recess and/or, in particular, directly on the end face pouch accumulator cell.

Furthermore, it is advantageous if the contact element is electrically conductively connected to the control unit and/or to the sensor via an electrical connection, preferably permanently.

It is also advantageous if the sensor has a first feeler and a second feeler. Preferably, these are each designed according to the previous description, wherein the features mentioned can be present individually or in any combination.

It is also advantageous if the first feeler and the second feeler, in particular their contact ends, are spaced apart in the direction of the transverse axis.

Proposed is an electronic device, in particular an electronic power tool, electronic gardening device and/or electronic cleaning device, with a battery pack. The battery pack is designed according to the preceding description, wherein the mentioned features may be present individually or in any combination.

Further advantages of the invention are described in the following embodiments. It shows:
- **Figure 1**: a side sectional view of a battery pack according to a first embodiment with cold pouch accumulator cells,
- **Figure 2**: a side sectional view of the battery pack of Figure 1 with warm pouch accumulator cells,
- **Figure 3**: a side sectional view of a battery pack according to a second embodiment with cold pouch accumulator cells,
- **Figure 4**: a side sectional view of the battery pack of Figure 3 with warm pouch accumulator cells.

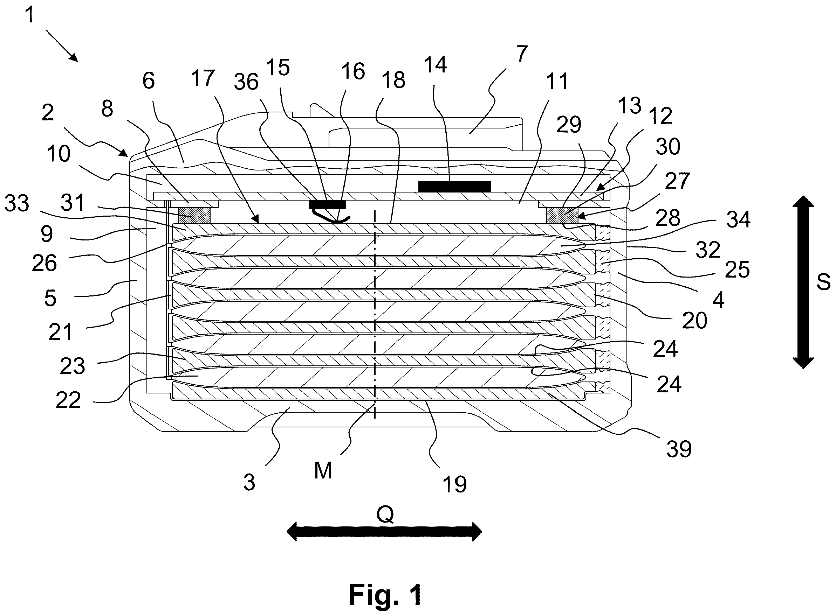

Figure 1 shows a battery pack 1 in a side sectional view. The battery pack 1 is intended for an electronic device not shown here and can be detachably attached to it via an electronics interface 7. The electronics interface 7 is designed in such a way that the battery pack 1 can be positively connected to a corresponding interface of the electronic device. With this connection, an electronic connection is also made between the battery pack 1 and the electronic device. The electronic device is preferably an electronic power tool, an electronic gardening device and/or an electronic cleaning device.

The battery pack 1 has a housing 2. According to the present embodiment, this housing 2 is designed as an outer housing of the battery pack 1. Alternatively, in an embodiment not shown here, the housing 2 could also be a carrier housing for the components of the battery pack 1, which is arranged in an additional outer housing of the battery pack 1.

The housing 2 comprises a first housing wall 3, which forms a bottom of the housing 2 as shown in the illustration. Furthermore, the housing 2 has a fourth housing wall 6 opposite the first housing wall 3. The side walls of the housing 2 are formed by a second housing wall 4 and a third housing wall 5 opposite the second housing wall 4.

As can be seen from Figure 1, a cell stack 17 is arranged within the housing 2. The cell stack 17 comprises a first end face 18 facing the fourth housing wall 6. Furthermore, the cell stack 17 comprises a second end face 19, which is arranged opposite the first housing wall 3. Laterally, the cell stack 17 is bounded by a first stack side 20 and a second stack side 21. The first stack side 20 is here arranged opposite the second housing wall 4. The second stack side 21 is arranged opposite the third housing wall 5.

The cell stack 17 comprises several pouch accumulator cells 22 arranged one above the other along a stack axis S. Preferably, the pouch accumulator cells 22 are based on lithium-ion technology. In pouch accumulator cells 22, the active components are located within a flexible sheath. This sheath is preferably formed from a foil, in particular from a plastic-aluminum composite foil. Preferably, the foil is thermally welded on at least one of its sides. The pouch accumulator cells 22 are electrically interconnected, in particular in series connection. For this purpose, the battery pack 1 has at least one electrical connection 26. According to Figure 1, this electrical connection 26 is located on the second stack side 21 and interconnects the pouch accumulator cells 22 there.

During operation of the battery pack 1, the pouch accumulator cells 22 heat up. In order to be able to dissipate this heat to the environment, the cell stack 17 comprises several heat-conducting-elements 23. These heat-conducting-elements 23 are preferably present in the form of heat-conducting plates. For the sake of clarity, only one of these heat-conducting-elements 23 is provided with a reference sign in the figures. Some of these heat-conducting-elements 23 are positioned in the direction of the stack axis S between two pouch accumulator cells 22 arranged one above the other. Furthermore, the cell stack 17 comprises a first end face heat-conducting-element 33 arranged at and/or at least partially forming the first end face 18 of the cell stack 17. Further, the cell stack 17 comprises a second end face heat-conducting-element 39 disposed at and/or at least partially forming the second end face 19 of the cell stack 17.

The heat-conducting-elements 23, 33, 39 are formed from a thermally conductive and/or flame-retardant material. A polymer is suitable for this purpose, for example, which preferably comprises bromide. Furthermore, the material of the heat-conducting-elements 23, 33, 39 can be designed in such a way that the volume increases as the temperature increases.

To ensure that the heat from the pouch accumulator cells 22 can be transferred as well as possible to the heat-conducting-elements 23, 33, 39, it is advantageous if these each have at least one contact surface 24 adjacent to the respective pouch accumulator cell 22, as shown in Figure 1. For reasons of clarity, the contact surfaces 24 of only one of the heat-conducting-elements 23 are provided with references. Preferably, the contact surfaces 24 have a correspondingly shaped and/or concave form to the adjacent pouch accumulator cells 22. At the second stack side 21, the heat-conducting-elements 23, 33, 39 terminate substantially flush with the pouch accumulator cells 22. At the first stack side 20, at least some of the heat-conducting-elements 23, 33, 39 project in the direction of a transverse axis Q beyond the pouch accumulator cells 22.

In order to be able to dissipate the heat generated by the pouch accumulator cells 22 during operation from the heat-conducting-elements 23, 33, 39 to the housing 2 as effectively as possible, the battery pack 1 comprises heat-conducting connecting-elements 25 which connect at least some of the heat-conducting-elements 23, 33, 39 to the housing 2. Also in this case, for reasons of clarity, only one of these heat-conducting connecting-elements 25 is provided with a reference sign in the figures. The at least one thermally conductive connecting-element 25 is preferably a thermally conductive adhesive. In the embodiment shown in Figure 1, the connecting-elements 25 are connected to the heat-conducting-elements 23, 33, 39 at the first stack side 20. Furthermore, the heat-conducting connecting-elements 25 are connected to the second housing wall 4 at their end facing away from the respective heat-conducting-element 23, 33, 39. The second housing wall 4 has an outer heat radiation surface 32 via which the heat transmitted by the connecting-elements 25 is radiated to the surroundings.

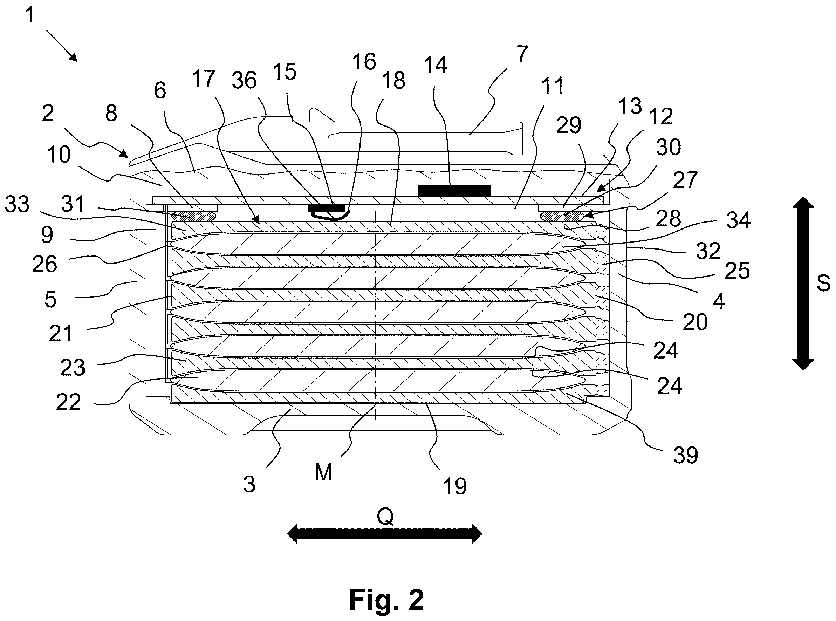

As can be seen from Figure 1, the cell stack 17 is arranged at its second end face 19 on the housing 2, namely in particular on the first housing wall 3. As a result, the cell stack 17, as shown in Figure 2, expands when heated, starting from the second end face 19 and/or the first housing wall 3, in the direction of a center axis M of the cell stack 17. The second end face 19 of the cell stack 17 remains stationary in this case. However, the first end face 18 of the cell stack 17 changes its position and moves in the direction of the fourth housing wall 6. In order to be able to follow this movement, the connecting-elements 25 are designed to be flexible and/or elastic. As a result, the first end face 18 of the cell stack 17 has a greater distance to the housing 2 in the cold state of the cell stack 17 shown in Figure 1, than in the heated state of the cell stack 17 shown in Figure 2.

The battery pack 1 comprises a control unit 12, which is electrically connected to the pouch accumulator cells 22 of the cell stack 17 via the electrical connection 26. Preferably, the control unit 12 comprises a battery management system of the battery pack 1. According to Figure 1, the control unit 12 comprises a printed circuit board 13, which extends perpendicular to the stack axis S and/or in the direction of the transverse axis Q of the battery pack 1. Furthermore, the control unit 12 comprises at least one processor 14, which is electrically connected to the printed circuit board 13. As can be seen from Figure 1, the control unit 12 is arranged in the region of the first end face 18 of the cell stack 17. In the direction of the stack axis S, the control unit 12 has a distance from the first end face 18 of the cell stack 17. The cell stack 17 can move into the free space of the housing 2 formed by this distance when heated, in particular without touching and/or exerting pressure on the control unit 12.

To protect the control unit 12 from thermal and mechanical influences of the cell stack 17, the housing 2 comprises a partition wall 8. This partition wall 8 divides the housing 2 into a first cavity 9 and a second cavity 10. The cell stack 17 is arranged in the first cavity 9. The control unit 12 is located in the second cavity 10. As a result, the cell stack 17 and the control unit 12 are spatially separated from each other by the partition wall 8. This protects the control unit 12 from mechanical and/or thermal influences of the cell stack 17.

To ensure that the cell stack 17 does not wobble inside the housing but always has a fixed and defined position, i.e. both in the cold state and in the extended warm state, the battery pack 1 preferably comprises at least one elastic and/or flexible compensation-element 27. The compensation-element 27 is arranged between the cell stack 17 and the housing 2 in such a way that the elastic compensation-element 27 is compressed in the intended use in the event of a heat-induced expansion of the cell stack 17 shown in Figure 2. This means that, on the one hand, the heat-related expansion of the cell stack 17 in the direction of the stack axis S is not impeded and, on the other hand, the cell stack 17 is continuously held by the compensation-element 27 in a defined position and/or at a defined distance, in particular from the control unit 12, which distance naturally decreases in a defined manner as the cell stack 17 expands.

In order that the compensation-element 27 can be compressed, this is formed from a compressible material, in particular a foam, according to the embodiment shown in Figure 1. Furthermore, the compressible material has a solid body or solid volume. Alternatively, however, the compensation-element 27 could also be formed from an incompressible material in an embodiment not shown here. In this case, however, the compensation-element 27 would have to have a resilient structure instead of a solid body, for example a spiral spring shape, in order to be able to ensure deformability.

To prevent heat generated by the pouch accumulator cells 22 from being transferred from the cell stack 17 to the control unit 12, it is advantageous for the compensation-element 27 to be formed of a thermally insulating material. In addition or alternatively, the material used to form the compensation-element 27 may include pores that also reduce the thermal conductivity of the compensation-element 27.

As can be seen from Figure 1, the compensation-element 27 is arranged with a first side 28, which faces the cell stack 17, on the first end face 18 of the cell stack 17, particularly directly. Furthermore, the compensation-element 27 comprises a second side 29 facing away from the first end face 18 of the cell stack 17. With this second side 29, the compensation-element 27 is arranged, particularly directly, on the housing 2, namely in the present case preferably on the partition wall 8. Alternatively, however, the compensation-element 27 could also be arranged with its second side 29 directly on the control unit 12.

According to Figure 1, the compensation-element 27 comprises at least two compensation sections 30, 31, which are spaced apart in the direction of the transverse axis Q of the cell stack 17. This ensures that the cell stack 17 can expand very uniformly, i.e. without tilting, in the direction of the stack axis S due to heat. The first compensation section 30 is arranged adjacent to the first stack side 20. Furthermore, the second compensation section 31 is arranged adjacent to the second stack side 21. The compensation sections 30, 31 may be connected to each other. In this case, the compensation-element 27 would extend in a frame-like manner around the center axis M of the cell stack 17. Alternatively, however, the compensation sections 30, 31 could be two parts separate from each other.

To ensure that the heat generated by the pouch accumulator cells 22 is not conducted towards the control unit 12 via the compensation-element 27, but instead to the heat radiation surface 32 of the housing 2 via the connecting-element 25, the heat-insulating compensation-element 27 has a lower thermal conductivity, in particular of less than or equal to 0.8 W/mK, compared to the heat-conducting connecting-element 25.

The control unit 12 is designed in such a way that it reduces and/or interrupts a main current of the battery pack 1 when a heat-related maximum expansion of the cell stack 17 is exceeded. For this purpose, the battery pack 1 preferably comprises a sensor 15 with which the heat-related expansion of the cell stack 17 in the direction of the stack axis S can be detected.

The sensor 15 is touch-sensitive and/or interacts with the cell stack 17, in particular with the first end face 18, via a touch contact for detecting the heat-induced expansion. This touch contact between the sensor 15 and the cell stack 17, in particular the first end face 18, can be permanent, as in the first embodiment shown in Figures 1 and 2, i.e. both in the cold and in the expanded, warm state of the pouch accumulator cells 22.

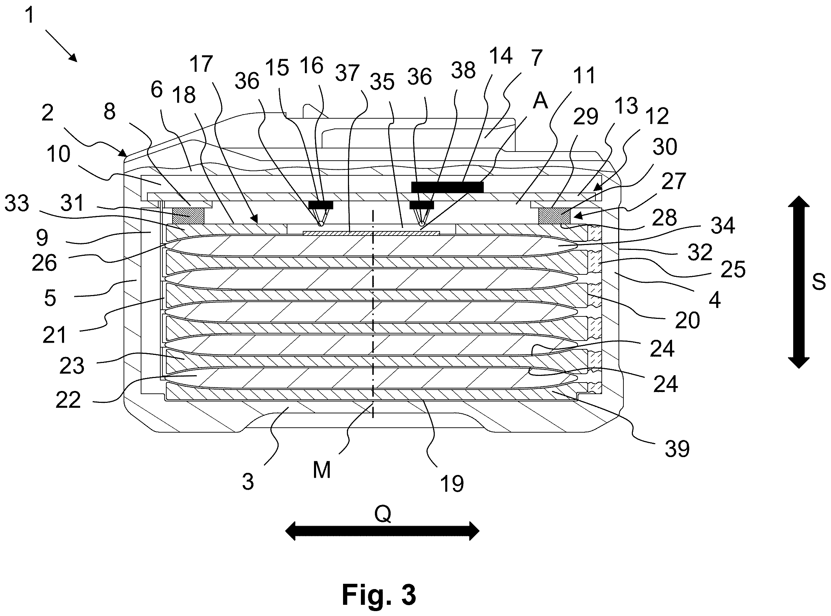

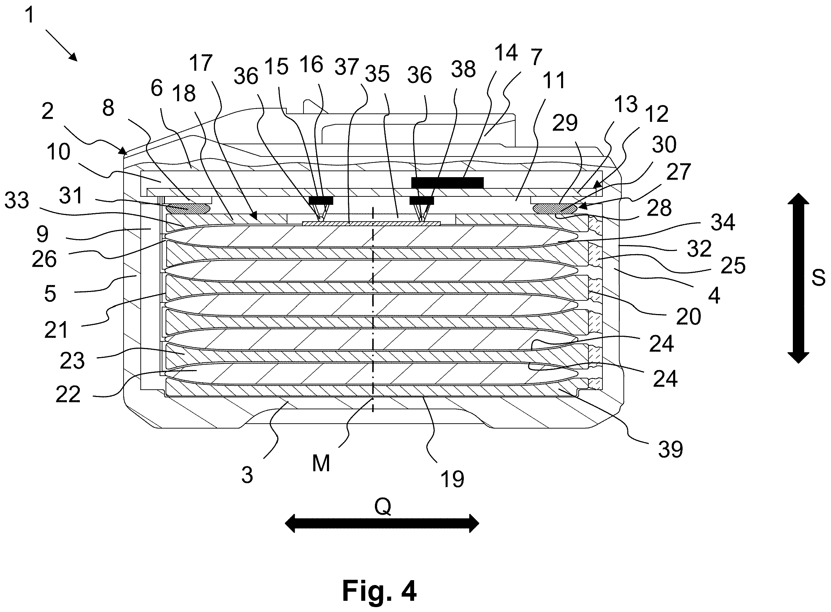

Alternatively, however, the sensor 15 can also be designed in such a way that the touch contact between the sensor 15 and the cell stack 17, in particular the first end face 18, as in the embodiment shown in Figures 3 and 4, is not formed until the cell stack 17 is in a thermally expanded state.

According to the first embodiment shown in Figures 1 and 2, the first end face 18 of the cell stack 17 is formed by the first end face heat-conducting-element 33. Alternatively, however, the first end face 18 may be formed only partially by the first end face heat-conducting-element 33. Accordingly, in the second embodiment shown in Figures 2 and 3, the first end face 18 is partially formed by an end face pouch accumulator cell 34 and/or a contact element 37. The contact element 37 will be explained in further detail below.

In order to be able to ensure the lowest possible overall height of the battery pack 1, the sensor 15 is arranged in/on the control unit 12 and/or is electrically connected to it. According to the embodiments of Figures 1 and 3, the sensor 15 is arranged on a side of the control unit 12 opposite the first end face 18 of the cell stack 17, in particular the printed circuit board 13.

So that the thermal expansion of the cell stack 17 can be detected by the sensor 15, the partition wall 8 has an opening 11. The opening 11 is arranged in the area of the center axis M of the cell stack 17. The sensor 15 is arranged and/or designed in such a way that it can be used to detect the heat-related expansion of the cell stack 17 through or via the opening 11 in the partition wall 8. As a result, the sensor 15 is at least partially located in the opening 11.

The sensor 15 has a first feeler 16. This extends via the opening 11 into the first cavity 9 of the housing 2, in which the cell stack 17 is arranged. The first feeler 16 has a contact end 36 with which the touch contact described above can be formed between the sensor 15 and the cell stack 17, in particular the first end face 18.

The contact end 36 can be moved in the direction of the stack axis S according to the embodiment shown in Figures 1 and 2. As a result, the contact end 36 of the first feeler 16 according to Figure 1 is already in contact with the cell stack 17 when it is cold. As the cell stack 17 heats up, it expands, with the contact end 36 as shown in Figure 2 moving along with the first end face 18. As soon as the sensor 15 has detected the maximum permissible expansion of the cell stack 17 via its first feeler 16, the control unit 12 regulates the current down or switches it off completely. During the expansion of the cell stack 17, it is held in a fixed or stationary position inside the housing 2 position via the at least one compensation-element 27. This enables reliable detection of the heat-related expansion via the sensor 15. In the embodiment shown in Figures 1 and 2, the sensor 15 is preferably designed as a microswitch.

Alternatively, however, the embodiment of the battery pack 1 shown in Fig-ures 1 and 2 could also be designed without a compensation-element 27. In this case, the cell stack 17 would rest with its first end face heat-conducting-element 33 directly against the housing 2, in particular against the partition wall 8. In this case, the elastic compliance of the cell stack 17 in the event of expansion due to heat would be realized via the first end face heat-conducting-element 33. In this case, however, the material of the heat-conducting-element 33 would have to have a higher elasticity, which could have a detrimental effect on the thermal conductivity of the heat-conducting-element 33.

In the following description of the alternative embodiment shown in Figures 3 and 4, the same reference signs are used for features that are identical and/or at least comparable in their design and/or mode of operation to the first embodiment shown in Figures 1 and 2. If these are not explained in detail again, they are designed according to the description of the first embodiment.

The second embodiment shown in Figures 3 and 4 differs from the first embodiment shown in Figures 1 and 2 essentially in the sensor 15. The sensor 15 shown in Figure 3 comprises a contact element 37. This contact element 37 is arranged on the cell stack 17 in such a way that the contact element 37 moves in the direction of the stack axis S when the cell stack 17 expands due to heat. For this purpose, the contact element 37 is arranged on the first end face 18 of the cell stack 17 and/or at least partially forms this first end face 18. The contact element 37 is designed to be electrically conductive and/or flexible. For this purpose, the contact element 37 is preferably a foil, in particular made of aluminum.

As shown in Figure 3, the sensor 15 includes at least a first feeler 16 in addition to the contact element 37. In addition, the sensor 15 may include a second feeler 38 as shown in Figure 3. The two feelers 16, 38 are spaced apart in the direction of the transverse axis Q. They are located at, at least partially, in the opening 11 of the partition wall 8. The first feeler 16 and/or the second feeler 38 may be formed according to the previous description referring to the embodiment shown in Figures 1 and 2. Consequently, these feelers 16, 38 each comprise a contact end 36. Further, these feelers 16, 38 may be formed movable or immovable in the direction of the stack axis S. In an immovable embodiment, the contact end 36 is rigidly located in one place. The contact element 37 is arranged opposite the at least one contact end 36 of the at least one feeler 16, 38 in the direction of the stack axis S. Furthermore, the at least one feeler 16, 38, in particular its contact end 36, is electrically conductive and interacts with the contact element 37, which is also electrically conductive.

In contrast to the first embodiment, at least one contact end 36 of the two feelers 16, 38 has a distance A from the cell stack 17, in particular from the first end face 18, in the case of cold pouch accumulator cells 22 according to Figure 3. In the illustrated embodiment, this applies to both feelers 16, 38. Alternatively, however, only one of the two contact ends 36 could be at a distance accordingly. The contact end 36 of the other feeler could instead permanently contact the contact element 37. A sensor circuit is interrupted by the distance A. The distance A here corresponds to the maximum permissible heat-related expansion of the cell stack 17 in the direction of the stack axis S. As soon as the cell stack 17 expands due to heat and has reached its maximum permissible expansion, the previously spaced contact element 37 comes into contact with the contact element 37. This closes the previously interrupted sensor circuit so that current flows through the contact element 37 and the at least one feeler 16, 38 and is detected accordingly by the sensor 15.

This sensor operating principle can be implemented in different ways. Accordingly, the sensor 15 can, for example, in an embodiment not shown here, have only a single first feeler 16. In this case, the contact element 37 must be permanently electrically connected to the control unit 12 and/or to the sensor 15 via an electrical connection not shown here. As soon as the contact end 36 of the single first feeler 16 touches the contact element 37, the sensor circuit would therefore be closed via the first feeler 16, the contact element 37 and the electrical line not shown here.

Alternatively, it would also be conceivable for one of the two feelers 16, 38 not to be at a distance A from the contact element 37, but instead to be permanently connected to it and/or in contact with it. As a result, the previously spaced feeler 16, 38 would also come into contact with the contact element 37 in this case with corresponding expansion of the cell stack 17 and thus close the sensor circuit. As a result, current would flow from the first feeler 16 to the contact element 37 and from the latter to the second feeler 38.

In the embodiment shown in Figure 3, the contact element 37 is not electrically conductively connected to the control unit 12 in the non-expanded state of the cell stack 17. Instead, both feelers 16, 38 have a corresponding distance A from the contact element 37. When the cell stack 17 is thermally expanded, the contact element 37 comes into contact with the contact ends 36 of both feelers 16, 38. This closes the sensor circuit so that current can flow from the first feeler 16 to the contact element 37 and then from the contact element 37 to the second feeler 38.

In order to be able to detect the thermally induced expansion more accurately and reliably, it is advantageous if the first end face heat-conducting-element 33 has a recess 35. This recess 35 extends completely through the first end face heat-conducting-element 33 in the direction of the stack axis S to the end face pouch accumulator cell 34. This allows the contact element 37 to be arranged directly on the end face pouch accumulator cell 34. The recess 35 is arranged in the region of the center axis M of the cell stack 17. Furthermore, the recess 35 is preferably closed over its entire circumference. As a result, the recess 35 forms a closed ring. As can be seen from Figure 3, the contact element 37 is arranged at least partially within the recess 35. Advantageously, this arrangement can further reduce the construction volume of the battery pack 1 in the direction of the stack axis S.

### Reference list

- 1: battery pack
- 2: housing
- 3: first housing wall
- 4: second housing wall
- 5: third housing wall
- 6: fourth housing wall
- 7: electronics interface
- 8: partition wall
- 9: first cavity
- 10: second cavity
- 11: opening
- 12: control unit
- 13: printed circuit board
- 14: processor
- 15: sensor
- 16: first feeler
- 17: cell stack
- 18: first end face of the cell stack
- 19: second end face of the cell stack
- 20: first stack side
- 21: second stack side
- 22: pouch accumulator cells
- 23: heat-conducting-element
- 24: contact surface
- 25: connecting-element
- 26: electrical connection
- 27: compensation-element
- 28: first side of the compensating element
- 29: second side of the compensation-element
- 30: first compensation section
- 31: second compensation section
- 32: heat radiation surface
- 33: first end face heat-conducting-element
- 34: end face pouch accumulator cell
- 35: recess
- 36: contact end
- 37: contact element
- 38: second feeler
- 39: second end face heat-conducting-element

- S: stack axis
- Q: transverse axis
- M: center axis
- A: distance

## Claims

1. Battery pack (1) for an electronic device, in particular for a power tool, gardening device and/or cleaning device, comprising:
a housing (2) and
a cell stack (17),
which is arranged in the housing (2) and comprises a plurality of pouch accumulator cells (22) arranged one above the other along a stack axis (S),
**characterized in**
**that** the battery pack (1) has at least one elastic compensation-element (27) which is arranged in the direction of the stack axis (S) between the cell stack (17) and the housing (2) in such a way that the elastic compensation-element (27) is compressed during intended use in the event of heat-induced expansion of the cell stack (17) in the direction of the stack axis (S), and/or
**that** the battery pack (1) has a sensor (15) with at least one feeler (16, 38), with which the heat-related expansion of the cell stack (17) in the direction of the stack axis (S) can be detected via touch contact, in particular with the cell stack (17).

2. Battery pack according to the previous claim, **characterized in that** the housing (2) has a partition wall (8), which divides the housing (2) into a first cavity (9), in which the cell stack (17) is preferably arranged, and a second cavity (10), in which a control unit (12) is preferably arranged, and/or
which has an opening (11), in particular in the region of a center axis (M) of the cell stack (17).

3. Battery pack according to one of the previous claims, **characterized in that** the cell stack (17) is connected to the housing (2), in particular to a first housing wall (3) opposite the partition wall (8), at its second end face (19) facing away from the first end face (18) in such a way that, when heated, the cell stack (17) expands starting from the second end face (19) in the direction of the stack axis (S) and/or only the first end face (18) changes its position in the direction of the stack axis (S).

4. Battery pack according to one of the previous claims, **characterized in that** the first end face (18) of the cell stack is formed at least partially by a first end face heat-conducting-element (33), and **in that** the first end face heat-conducting-element (33) has a recess (35) which extends in the direction of the stack axis (S) preferably completely through the first end face heat-conducting-element (33) as far as a end face pouch accumulator cell (34).

5. Battery pack according to one of the previous claims, **characterized in that** the sensor (15) is arranged and/or designed in such a way that it can be used to detect the heat-related expansion of the cell stack (17) via the opening (11) of the partition wall (8).

6. Battery pack according to one of the previous claims, **characterized in that** the sensor (15) is electrically connected to the control unit (12) and/or is arranged on the control unit (12), in particular on a side of the control unit (12) facing the cell stack (17).

7. Battery pack according to any one of the preceding claims, **characterized in that** the feeler (16, 38) extends into the first cavity (9) via the opening (11) of the partition wall (8).

8. Battery pack according to one of the previous claims, **characterized in that** the feeler (16, 38) has a contact end (36) which, in the unexpanded state of the cell stack (17), rests against the first end face (18) of the cell stack (17) or which, in the unexpanded state of the cell stack (17), is at a distance (A) from the first end face (18) of the cell stack (17), so that a sensor circuit is interrupted.

9. Battery pack according to one of the previous claims, **characterized in that** the distance (A) in the direction of the stack axis (S) corresponds to the maximum permissible heat-related expansion of the cell stack (17).

10. Battery pack according to one of the previous claims, **characterized in that** the feeler (16, 38), in particular the contact end (36), is movable or immovable in the direction of the stack axis (S).

11. Battery pack according to one of the previous claims, **characterized in that** the feeler (16, 38), in particular the contact end (36), is electrically conductive and/or spring-loaded in the direction of the cell stack (17).

12. Battery pack according to one of the previous claims, **characterized in that** the cell stack (17) has, in particular at its first end face (18), an electrically conductive and/or flexible contact element (37), in particular a foil, which is preferably made of aluminum.

13. Battery pack according to one of the preceding claims, **characterized in that** the contact element (37) is arranged in the recess (35) and/or, in particular directly, on the end face pouch accumulator cell (34).

14. A battery pack according to any one of the preceding claims, **characterized in that** the sensor (15) comprises a first feeler (16) and a second feeler (38), preferably each formed according to any one of the preceding claims, and
wherein the first feeler (16) and the second feeler (38) are preferably spaced apart from one another in the direction of the transverse axis (Q).

15. Electronic device, in particular a power tool, gardening device and/or cleaning device, with a battery pack (1), **characterized in that** the battery pack (1) is designed according to one or more of the previous claims.
